# EUROPEAN PATENT APPLICATION

(11) **EP 3 937 026 A2**
(43) Date of publication of application: **12.01.2022**
(21) Application number: 21202752.8
(22) Date of filing: 14.10.2021
(51) Int. Cl.: G06F 16/215, G06K 9/00

(54) **DATA PROCESSING METHOD AND APPARATUS, ELECTRONIC DEVICE AND STORAGE MEDIUM**

(30) Priority: 12.11.2020 CN 202011262605
(71) Applicant: Beijing Baidu Netcom Science and Technology Co., Ltd., Beijing 100085 (CN)
(72) Inventor: YANG, Xue, BEIJING, 100085 (CN)
(74) Representative: Regimbeau

(57) **Abstract**

Provided are a data processing method and apparatus, an electronic device and a storage medium which relate to the technical field of artificial intelligence and further relate to fields such as the field of deep learning. The implementation solution is selecting to-be-reviewed data from a set of annotated data according to at least one of data annotation information or annotation person information and performing a quality check on the to-be-reviewed data. With data quality ensured, the efficiency of a data quality check is improved, the labor cost is reduced, and a new idea for the data quality check is provided.

## Description

### TECHNICAL FIELD

The present application relates to the technical field of artificial intelligence, in particular to deep learning and automatic driving technologies, and specifically to a data processing method and apparatus, an electronic device and a storage medium.

### BACKGROUND

With the gradual implementation of artificial intelligence algorithms, algorithm research is currently popular. The quality of data as the fuel for training algorithms plays a crucial role in algorithm accuracy. However, in order to ensure the quality of output data, the quality check of all data is mainly performed manually, which is inefficient, is high in labor cost and requires to be improved urgently.

### SUMMARY

The present application provides a data processing method and apparatus, an electronic device and a storage medium.

According to an aspect of the present application, a data processing method is provided. The method includes steps described below.

To-be-reviewed data is selected from a set of annotated data according to at least one of data annotation information or annotation person information.

A quality check is performed on the to-be-reviewed data.

According to another aspect of the present application, a data processing apparatus is provided. The apparatus includes a data selection module and a quality check module.

The data selection module is configured to select to-be-reviewed data from a set of annotated data according to at least one of data annotation information or annotation person information.

The quality check module is configured to perform a quality check on the to-be-reviewed data.

According to another aspect of the present application, an electronic device is provided. The electronic device includes at least one processor and a memory.

The memory is communicatively connected to the at least one processor.

The memory stores an instruction executable by the at least one processor. The instruction is executed by the at least one processor to cause the at least one processor to perform the data processing method of any one of embodiments of the present application.

According to another aspect of the present application, a non-transitory computer-readable storage medium is provided. The storage medium stores a computer instruction for causing a computer to perform the data processing method of any one of embodiments of the present application.

According to the present application, with the data quality ensured, the efficiency of a data quality check is improved, the labor cost is reduced, and a new idea for the data quality check is provided.

It is to be understood that the content described in this part is neither intended to identify key or important features of embodiments of the present application nor intended to limit the scope of the present application. Other features of the present application are apparent from the description provided hereinafter.

### BRIEF DESCRIPTION OF DRAWINGS

The drawings are intended to provide a better understanding of the present solution and not to limit the present application. In the drawings:
FIG. 1 is a flowchart of a data processing method according to an embodiment of the present application;
FIG. 2 is a flowchart of another data processing method according to an embodiment of the present application;
FIG. 3 is a flowchart of another data processing method according to an embodiment of the present application;
FIG. 4 is a flowchart of another data processing method according to an embodiment of the present application;
FIG. 5 is a flowchart of another data processing method according to an embodiment of the present application;
FIG. 6 is a flowchart of another data processing method according to an embodiment of the present application;
FIG. 7 is a structure diagram of a data processing apparatus according to an embodiment of the present application; and
FIG. 8 is a block diagram of an electronic device for implementing a data processing method according to an embodiment of the present application.

### DETAILED DESCRIPTION

Example embodiments of the present application, including details of embodiments of the present application, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present application. Similarly, description of well-known functions and constructions is omitted hereinafter for clarity and conciseness.

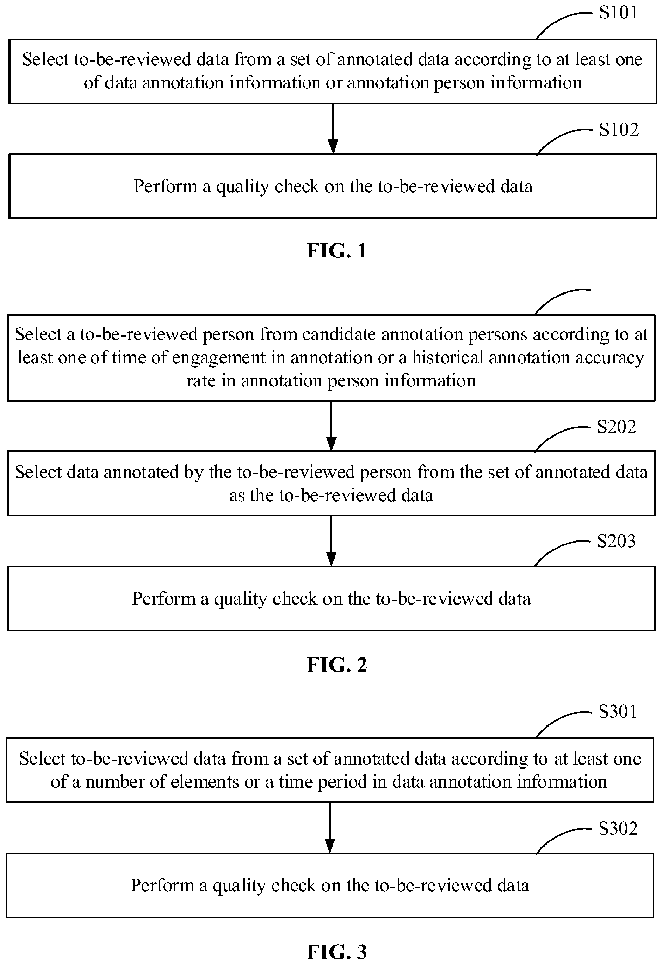

FIG. 1 is a flowchart of a data processing method according to an embodiment of the present application. The embodiments of the present application are suitable for the case of how to process data and especially suitable for the case of how to perform a quality check on annotated data in scenarios in which data annotation is required, such as obstacle recognition scenarios, target (such as a vehicle) tracking scenarios, human key point (such as face) recognition scenarios and named entity recognition scenarios such that the efficiency of the data quality check is improved while data quality is ensured. This embodiment may be performed by a data processing apparatus. The apparatus may be implemented by software and/or hardware and may be integrated into an electronic device carrying data processing functions, such as a server device. As shown in FIG. 1, the method includes steps described below.

In S101, to-be-reviewed data is selected from a set of annotated data according to at least one of data annotation information or annotation person information.

In this embodiment, the set of annotated data is an annotated data set and is obtained through annotation of a set of to-be-annotated data. For example, in a vehicle tracking scenario, the set of to-be-annotated data includes multiple consecutive frames of pictures, and each frame of picture is annotated according to an annotation requirement so as to obtain the set of annotated data. The data types may be different in different annotation scenarios. The data type may include, but is not limited to, picture, speech, text, video, webpage and the like.

After a person participating in this data annotation finishes the data annotation, annotated data may be submitted to a set database; furthermore, when it is detected that this data annotation task has been completely finished, multi-dimensional information such as data annotation information and annotation person information may be acquired first; and then to-be-reviewed data may be selected from a set of annotated data according to at least one of the data annotation information or the annotation person information.

The data annotation information may include relevant information of elements used for this data annotation, for example, may include an element type, a number of elements and the like. The element type may include, but is not limited to, a point, a line, a boarder and a region. The data annotation information may also include relevant information in the process of this data annotation, for example, may include a time period, annotation duration and the like. The time period may be, for example, 8: 00 to 10: 00 a.m., 10: 00 to 12: 00 p.m. and the like. Each piece of annotated data in the set of annotated data may have a unique identifier such as a serial number; and the data annotation information of different annotated data may be the same or different. Further, data annotation information of each piece of annotated data may be dynamically recorded in real time during the annotation process of to-be-annotated data associated with such piece of annotated data by the annotation person and be automatically generated after such piece of annotated data is submitted to the set database by the annotation person.

The annotation person information is relevant information of a person participating in this data annotation and may include, but is not limited to, the name, identification (such as an identity number and a work number), time of engagement in annotation, skilled annotation field and historical annotation accuracy rate. Relevant information of the person participating in this data annotation, that is, annotation person information, can be acquired from a pre-constructed annotation person information database.

In this embodiment, the to-be-reviewed data may be selected from the set of annotated data according to a set review proportion and in conjunction with data of at least one dimension, that is, at least one of data annotation information or annotation person information. The to-be-reviewed data is annotated data selected from the set of annotated data. Further, compared with other annotated data in the set of annotated data, the to-be-reviewed data may also be referred to as risk data, that is, annotated data having a relatively high error probability.

For example, the to-be-reviewed data may be selected from the set of annotated data according to a set review proportion and data annotation information; for example, the to-be-reviewed data may be selected from the set of annotated data according to a set review proportion and annotation duration in the data annotation information. In an embodiment, the annotated data whose annotation duration is longer than the upper limit of set duration and/or the annotated data whose annotation duration is less than the lower limit of set duration may be selected from the set of annotated data as the to-be-reviewed data according to the set annotation proportion.

Alternatively, the to-be-reviewed data may be selected from the set of annotated data according to the set review proportion and the annotation person information. Alternatively, the to-be-reviewed data may be selected from the set of annotated data according to the set review proportion, the data annotation information and the annotation person information. The specific implementations are described in detail in the embodiments described below.

In S102, a quality check is performed on the to-be-reviewed data.

In an embodiment, the to-be-reviewed data can be subjected to the quality check after being obtained. A manner in which the to-be-reviewed data is reviewed may be determined according to the annotation requirement of a user; and then a quality check is performed on the to-be-reviewed data in the manner. For example, if the annotation requirement of the user is subjective, the manner in which the to-be-reviewed data is reviewed may be a multi-person fitting answer manner. In an embodiment, the to-be-annotated data associated with the to-be-reviewed data may be annotated by a preset number of quality check persons to obtain the preset number of pieces of fitting annotated data; a final fitting result can be obtained according to the preset number of pieces of fitting annotated data and a set strategy such as a strategy in which the minority is subordinate to the majority and a strategy in which a person having a high historical annotation accuracy rate has priority over a person having a low historical annotation accuracy rate; the fitting result is compared with the to-be-reviewed data; if the fitting result is consistent with the to-be-reviewed data, the result of the to-be-reviewed data is determined to be passing the quality check, and otherwise, the to-be-reviewed data is determined to be not passing the quality check.

If the annotation requirement of the user is objective, the manner in which the to-be-reviewed data is reviewed may be an algorithm quality check such as an optical character recognition (OCR) algorithm quality check. In an embodiment, an existing OCR algorithm may be called for automatically performing the quality check on the to-be-reviewed data. Further, in order to ensure the quality of the quality check, a quality check person can perform a secondary quality check if the quality check result obtained by using the algorithm quality check has low confidence.

It is to be noted that the amount of data in the set of annotated data, as data required for training an algorithm, is generally relatively large in order to ensure the precision of the algorithm. The existing manner in which a quality check is manually performed on all of the annotated data is high in labor cost and low in efficiency. Moreover, the existing manner in which the quality check is performed on some annotated data randomly extracted from all of the annotated data features randomness and cannot ensure the data quality. In the present application, through a comprehensive analysis based on multi-dimensional data such as the data annotation information and the annotation person information, the quality check is performed on the to-be-reviewed data selected from the set of annotated data; that is, the quality check is performed on the risk data in the set of annotated data. In this manner, the efficiency of a data quality check is improved and the labor cost is reduced while the data quality is ensured.

According to the technical solutions of the embodiment of the present application, through the comprehensive analysis based on the multi-dimensional data such as the data annotation information and the annotation person information, the quality check is performed on the to-be-reviewed data selected from the set of annotated data. Compared with the existing manner of a data quality check, the present application improves the efficiency of a data quality check, reduces the labor cost and provides a new idea for the data quality check while ensuring the data quality.

In order to ensure the data quality, in an example embodiment of the present application, before the to-be-reviewed data is selected from the set of annotated data according to the at least one of the data annotation information or the annotation person information, the method may further include performing cleaning processing on a set of to-be-annotated data and annotating the set of to-be-annotated data subjected to the cleaning processing to obtain the set of annotated data.

In this embodiment, the set of to-be-annotated data may be a set of to-be-annotated data provided by the user or a set of to-be-annotated data collected according to an annotation task provided by the user.

Different cleaning manners may be adopted for different annotation material types. For example, for speech annotation materials, the set of to-be-annotated data may be cleaned by determining whether serious noise exists and/or whether the duration meets the requirements; for picture annotation materials, the set of to-be-annotated data may be cleaned by determining whether a picture is clear and/or whether distortion exists; for text annotation materials, the set of to-be-annotated data may be cleaned by determining whether duplication exists.

After the set of to-be-annotated data is cleaned, the cleaned set of to-be-annotated data may be sent to an annotation person (that is, the person participating in this data annotation) so that the cleaned set of to-be-annotated data can be annotated and the set of annotated data can be thus obtained.

It is to be noted that in this embodiment, in the scenario where a quality check of annotated data is required, the operation of cleaning the set of to-be-annotated data is added so that dangerous (or low-quality) data can be warned in advance and supplementary collection can be performed, thus laying a foundation for ensuring the data quality and improving data delivery efficiency.

FIG. 2 is a flowchart of another data processing method according to an embodiment of the present application. On the basis of the preceding embodiment, this embodiment of the present application provides a manner of selecting to-be-reviewed data from a set of annotated data according to annotation person information in a case where multiple persons participate in this data annotation. As shown in FIG. 2, the method includes steps described below.

In S201, a to-be-reviewed person is selected from candidate annotation persons according to at least one of time of engagement in annotation or a historical annotation accuracy rate in annotation person information.

In this embodiment, candidate annotation persons are persons participating in this data annotation. The number of candidate annotation persons may be at least two. Time of engagement in annotation in annotation person information of each candidate person may be the time such candidate person has engaged in data annotation. Further, in order to more accurately select the to-be-reviewed data from annotated data, the time of engagement in annotation may be specifically defined to be time such candidate annotation person has engaged in data annotation involving a data type which is the same as the data type of the current annotated data. For each candidate annotation person, the historical annotation accuracy rate of such candidate annotation person may be obtained through counting of the historical annotation data quality checks of such candidate annotation person. Similar to time of engagement in annotation, the historical annotation accuracy rate may also be specifically defined to be the historical accuracy rate of annotating, by such candidate annotation person, data whose data type is the same as the data type of the current annotated data.

The to-be-reviewed person is the annotation person selected from the candidate annotation persons and that needs to be paid close attention to. That is, compared with other persons among the candidate annotation persons, the to-be-reviewed person has a higher probability of error risk in annotated data. The number of to-be-reviewed persons may be one or more; in order to ensure the reasonableness of the number of pieces of to-be-reviewed data for subsequent review, the number of to-be-reviewed persons is further determined by a set review proportion, the number of pieces of data annotated by each candidate annotation person this time, the annotation person information of each candidate annotation person and the like.

The candidate annotation persons may be sorted (such as in ascending order) according to the time of engagement in annotation, and then a to-be-reviewed person may be selected from the candidate annotation persons according to the sorting result (for example, the first one or more candidate annotation persons may be taken as the to-be-reviewed person); in order to ensure the reasonableness of the number of pieces of to-be-reviewed data for subsequent review, the to-be-reviewed person may be further selected from the candidate annotation persons according to the sorting result, the set review proportion, the number of pieces of data annotated by each candidate annotation person this time and the like.

Alternatively, a candidate annotation person whose historical annotation accuracy rate is less than a set accuracy rate may be regarded as a to-be-reviewed person; the candidate annotation persons may also be sorted in ascending order according to the historical annotation accuracy rate, and then the first one or more candidate annotation persons may be taken as the to-be-reviewed person; in order to ensure the reasonableness of the number of pieces of to-be-reviewed data for subsequent review, the to-be-reviewed person may be further selected from the candidate annotation persons according to the sorting result, the set review proportion, the number of pieces of data annotated by each candidate annotation person this time and the like.

Alternatively, a candidate annotation person whose time of engagement in annotation is less than a set time value and whose historical annotation accuracy rate is less than a set accuracy rate is regarded as a to-be-reviewed person. The candidate annotation persons may also be sorted according to data of two dimensions, that is, the time of engagement in annotation and the historical annotation accuracy rate; and then the to-be-reviewed person may be selected from the candidate annotation persons according to the sorting result, the set review proportion, the number of pieces of data annotated by each candidate annotation person this time and the like.

Alternatively, a first to-be-reviewed person may be first selected from candidate annotation persons according to a skilled annotation field. For example, a candidate annotation person skilled in an annotation field that is different from the field to which the current annotated data belongs is regarded as a first to-be-reviewed person; and then, a second to-be-reviewed person may be selected from the remaining candidate annotation persons according to the at least one of the time of engagement in annotation or historical annotation accuracy rate.

In S202, data annotated by the to-be-reviewed person is selected from the set of annotated data as the to-be-reviewed data.

Part or all of the data annotated by the to-be-reviewed person in the set of annotated data may be used as the to-be-reviewed data; further, according to a set review proportion, data annotated by the to-be-reviewed person may be selected from the set of annotated data as the to-be-reviewed data.

It is to be noted that in this embodiment, data such as time of engagement in annotation and a historical annotation accuracy rate is introduced and the person that needs to be paid close attention to, that is, the to-be-reviewed person, is selected from the candidate annotation persons so that the risk data, that is, the to-be-reviewed data, can be selected from the set of annotated data with the to-be-reviewed person as a bridge. This embodiment provides an idea for selecting the to-be-reviewed data from the set of annotated data.

In S203, a quality check is performed on the to-be-reviewed data.

According to the technical solution of this embodiment of the present application, the time of engagement in annotation and the historical annotation accuracy rate are introduced and the person that needs to be paid close attention to, that is, the to-be-reviewed person, is selected from the candidate annotation persons so that the to-be-reviewed data can be selected from the set of annotated data with the to-be-reviewed person as a bridge. This technical solution provides an idea for selecting the to-be-reviewed data from the set of annotated data. Meanwhile, the quality check is performed on the to-be-reviewed data so that the efficiency of a data quality check is improved and the labor cost is reduced while the data quality is ensured.

FIG. 3 is a flowchart of another data processing method according to an embodiment of the present application. On the basis of the preceding embodiment, this embodiment of the present application provides a manner of selecting to-be-reviewed data from a set of annotated data according to data annotation information. As shown in FIG. 3, the method includes steps described below.

In S301, to-be-reviewed data is selected from a set of annotated data according to at least one of a number of elements or a time period in data annotation information.

In this embodiment, for each piece of annotated data, the time period is a time period when to-be-annotated data associated with the annotated data is annotated, for example, 8:00 to 10: 00 a.m.; the number of elements is the number of elements in the annotated data or the number of elements used for obtaining the annotated data. For example, in an obstacle recognition scenario, a boarder may be used for annotating an obstacle in a certain frame of picture, and the number of elements in an annotated frame of picture (that is, annotated data) is the number of boarders.

The to-be-reviewed data may be selected from the set of annotated data according to the time period. For example, the annotated data may be sorted according to the time period; and then the to-be-reviewed data is selected from the set of annotated data according to a set review proportion and the sorting result. For example, annotated data within a set time period (such as 10:00 to 12:00 p.m. and 0:00 to 5:00 a.m.) may be selected from the set of annotated data as the to-be-reviewed data.

Alternatively, the to-be-reviewed data may be selected from the set of annotated data according to the number of elements. For example, the average value of elements in the set of annotated data is determined; and according to a set review proportion, annotated data with the number of elements being greater than the average value of elements is selected from the set of annotated data as the to-be-reviewed data.

Alternatively, the to-be-reviewed data may also be selected from the set of annotated data according to the time period and the number of elements. For example, the annotated data may be sorted according to data of two dimensions, that is, the time period and the number of elements; and then the to-be-reviewed data may be selected from the set of annotated data according to the sorting result and the set review proportion. In an embodiment, annotated data within the set time period and with the number of elements being greater than the average value of elements is selected from the set of annotated data as the to-be-reviewed data.

Alternatively, the to-be-reviewed data may also be selected from the set of annotated data according to annotation duration, the time period of annotation, the number of elements and the like.

Alternatively, the to-be-reviewed data may also be selected from the set of annotated data in conjunction with annotation person information and data annotation information. For example, the to-be-reviewed data may also be selected from the set of annotated data according to the historical annotation accuracy rate in the annotation person information, the annotation duration, time period of annotation and number of elements in the data annotation information and the like.

In S302, a quality check is performed on the to-be-reviewed data.

According to the technical solution of this embodiment of the present application, the to-be-reviewed data is selected from the set of annotated data according to the time period and the number of elements. This technical solution provides an idea for selecting the to-be-reviewed data from the set of annotated data. Meanwhile, the quality check is performed on the to-be-reviewed data so that the efficiency of the data quality check is improved and the labor cost is reduced while the data quality is ensured.

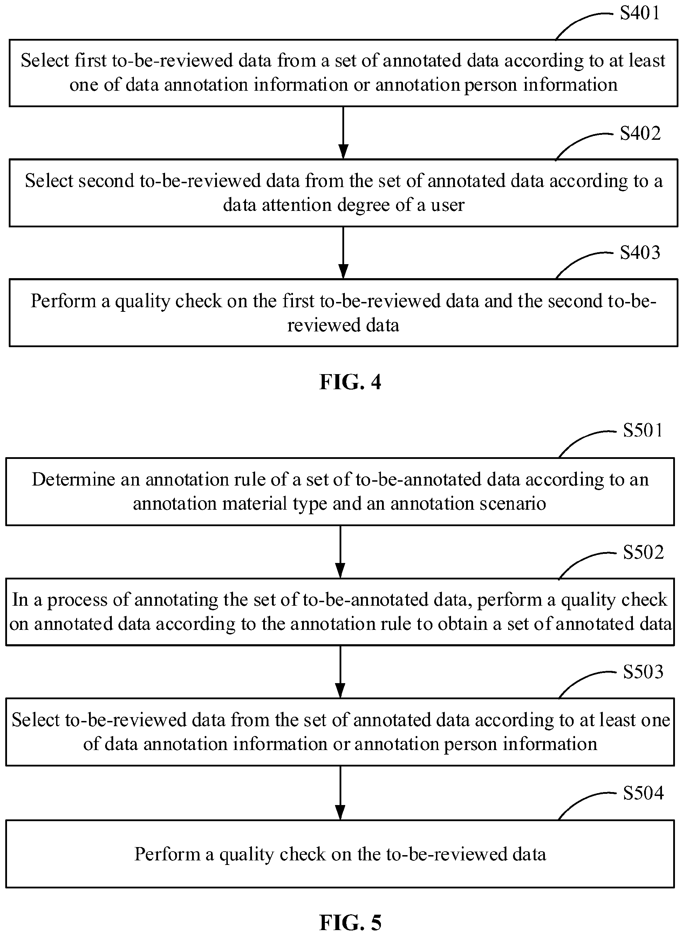

FIG. 4 is a flowchart of another data processing method according to an embodiment of the present application. On the basis of the preceding embodiment, this embodiment of the present application further provides a manner of selecting to-be-reviewed data from a set of annotated data. As shown in FIG. 4, the method includes steps described below.

In S401, first to-be-reviewed data is selected from a set of annotated data according to at least one of data annotation information or annotation person information.

In an embodiment, according to a first set review proportion, part of the annotated data may be selected from the set of annotated data as the first to-be-reviewed data according to at least one of the data annotation information and the annotation person information.

In S402, second to-be-reviewed data is selected from the set of annotated data according to a data attention degree of a user.

In this embodiment, the user is the party providing this annotation task or the party having this data annotation requirement; the data attention degree of the user may also be referred to as the data preference of the user, which can reflect the degree to which the user pays attention to the data; further, the data attention degree of the user may be determined according to the annotation requirement of the user. For example, it is pointed out in the annotation requirement of the user that pictures numbered 200 to 300 are prone to annotation errors, and then it can be determined that the user pays more attention to pictures numbered 200 to 300 than to other pictures.

The second to-be-reviewed data may be selected from the set of annotated data according to a second set review proportion and the data attention degree of the user. The first set review proportion may be the same as or different from the second set review proportion (for example, the first set review proportion is greater than the second set review proportion); the second to-be-reviewed data is different from the first to-be-reviewed data, the second to-be-reviewed data may be part of the annotated data in the set of annotated data except the first to-be-reviewed data, and the second to-be-reviewed data may be a necessary supplement to the first to-be-reviewed data.

In an embodiment, the annotated data with high data attention degree in the set of annotated data may be regarded as the second to-be-reviewed data according to the second set review proportion.

It is to be noted that through the comprehensive analysis based on the multi-dimensional data such as the data annotation information and the annotation person information, the first to-be-reviewed data is selected from the set of annotated data; on such basis, the second to-be-reviewed data different from the first to-be-reviewed data is selected from the set of annotated data based on the introduced data attention degree of the user, which increases the flexibility of the solution and provides an idea for selecting the to-be-reviewed data from the set of annotated data.

In S403, a quality check is performed on the first to-be-reviewed data and the second to-be-reviewed data.

According to the technical solution of this embodiment of the present application, through the comprehensive analysis based on the multi-dimensional data such as the data annotation information and the annotation person information, the first to-be-reviewed data is selected from the set of annotated data; on such basis, the second to-be-reviewed data different from the first to-be-reviewed data is selected from the set of annotated data based on the introduced data attention degree of the user; and the quality check is performed on the first to-be-reviewed data and the second to-be-reviewed data. In this manner, the efficiency of a data quality check is improved and the labor cost is reduced while the data quality is ensured.

FIG. 5 is a flowchart of another data processing method according to an embodiment of the present application. The process of obtaining the set of annotated data is added in this embodiment of the present application on the basis of the preceding embodiment. As shown in FIG. 5, the method includes steps described below.

In S501, an annotation rule of a set of to-be-annotated data is determined according to an annotation material type and an annotation scenario.

In order to ensure the data quality, an automatic quality check strategy can be introduced in an annotation stage. In an example embodiment of the present application, the annotation rule of the set of to-be-annotated data may be determined according to the annotation material type and the annotation scenario in the annotation stage. In this embodiment, the annotation material type may include, but is not limited to, speech, picture and text; the annotation scenario may include an obstacle recognition scenario, a target (such as a vehicle) tracking scenario, a human key point (such as face) recognition scenario and a named entity recognition scenario. The annotation scenario may also include an annotation requirement which may be a requirement set by a user for annotating the set of annotated data, such as what to annotate, what type of element to use for annotation, the size of an annotation element and the attribute of an annotation element.

Different annotation rules may be provided for different annotation material types; further, different annotation rules may be provided for the same annotation material type in different annotation scenarios. In addition, different annotation rules may also be provided for different annotation requirements in the same annotation scenario.

In an embodiment, whether this annotation task is a personalized annotation task may be determined according to the annotation scenario (specifically according to the annotation requirement in the annotation scenario); if this annotation task is not a personalized annotation task, according to the annotation material type and the annotation scenario, an annotation rule commonly used for the annotation material type in the annotation scenario may be obtained from a general rule base as the annotation rule of the set of to-be-annotated data; if this annotation task is a personalized annotation task, an annotation rule may be customized for this annotation task according to the annotation scenario and the annotation material type, and the customized annotation rule may be associated with this annotation task and added to a customized rule base. The general rule base may include general annotation rules for all annotation material types in all annotation scenarios. Correspondingly, the customized rule base may include customized annotation rules of different users.

In S502, in a process of annotating the set of to-be-annotated data, a quality check is performed on annotated data according to the annotation rule to obtain a set of annotated data.

Further, after the annotation rule of the set of to-be-annotated data is determined, the quality check on the annotated data may be automatically performed in real time according to the annotation rule in the process where an annotation person annotates the set of to-be-annotated data. For example, in a scenario of multiple consecutive frames of images, if the annotation rule is the general annotation rule, a quality check can be performed on annotated data of a current frame according to an object type in annotated data of the previous frame.

In an embodiment, for the vehicle tracking scenario, the general annotation rule may include that for annotation of multiple consecutive frames of images, it is required that types of objects (such as types of vehicles) with the same serial number are consistent. Then, when it is detected that vehicles with the same type are annotated with different serial numbers by an annotation person in the current frame of image and in the previous frame of image, the annotation person may be reminded of this annotation error, suggestion of what to annotate and the like.

For example, in a scenario of multiple consecutive frames of images, if the annotation rule is the customized annotation rule, a quality check may be performed on annotated data of a current frame according to a change of an object in the annotated data of the current frame in annotated data of historical frames.

In an embodiment, for the vehicle tracking scenario, the customized annotation rule may include that for the annotation of multiple consecutive frames of images, it is required that if a certain vehicle disappears for several frames (such as 5 frames), such vehicle is regarded as a new object and cannot use the original serial number. Further, an annotation person annotates a certain vehicle with serial number 15 from the first frame of image to the fifth frame of image and such vehicle disappears from the sixth frame of image to the tenth frame of image; if it is detected that the annotation person adds the annotation of serial number 15 in the current frame of image (that is, the eleventh frame of image), the annotation person may be reminded of this annotation error, suggestion of what to annotate and the like.

In order to further ensure the data quality, the step of performing an automatic quality check in the annotation stage may further include automatically performing a secondary quality check on the annotated data finished by the annotation person based on an annotation rule when the annotation person finishes the annotation task and performs the submission. Further, data passing the secondary quality check is annotated data which can then be subjected to operations in S503 and S504.

It is to be noted that this embodiment introduces the automatic quality check process in the annotation stage, thereby greatly improving the data quality.

In S503, to-be-reviewed data is selected from the set of annotated data according to at least one of data annotation information or annotation person information.

In S504, a quality check is performed on the to-be-reviewed data.

According to the technical solution of this embodiment of the present application, the automatic quality check process is introduced in the annotation stage so that the data quality is greatly improved; and then through a comprehensive analysis based on multi-dimensional data such as the data annotation information and the annotation person information, the quality check is performed on the to-be-reviewed data selected from the set of annotated data. Compared with the existing manner of a data quality check, the present application improves the efficiency of a data quality check, reduces the labor cost and provides a new idea for the data quality check while ensuring the data quality.

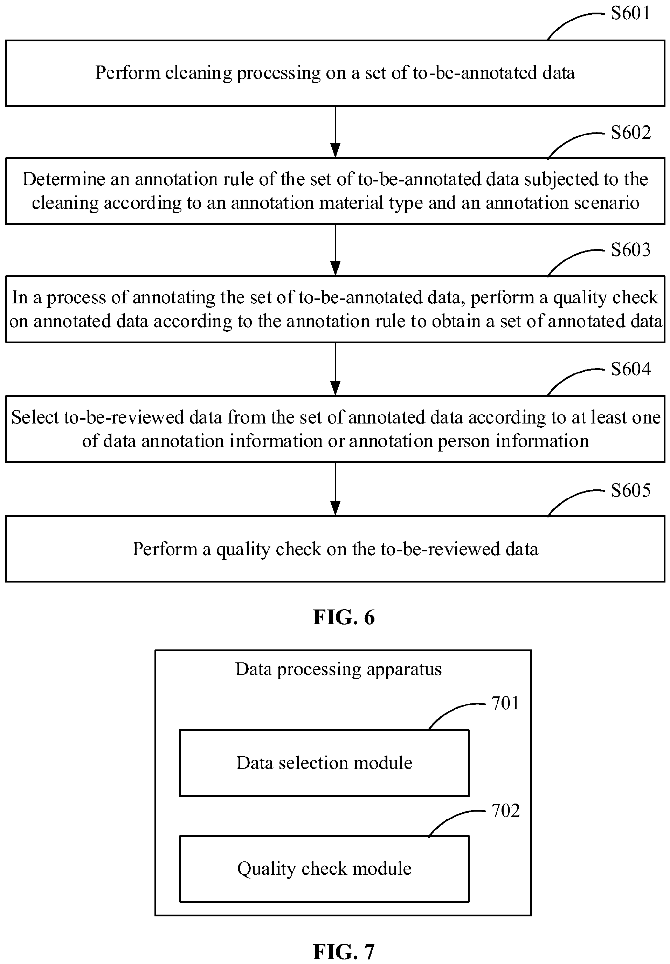

FIG. 6 is a flowchart of another data processing method according to an embodiment of the present application. This embodiment of the present application provides an example on the basis of the preceding embodiment. As shown in FIG. 6, the method includes steps described below.

In S601, cleaning processing is performed on a set of to-be-annotated data.

In S602, an annotation rule of the set of to-be-annotated data subjected to the cleaning processing is determined according to an annotation material type and an annotation scenario.

In S603, in a process of annotating the set of to-be-annotated data, a quality check is performed on annotated data according to the annotation rule to obtain a set of annotated data.

In S604, to-be-reviewed data is selected from the set of annotated data according to at least one of data annotation information or annotation person information.

In S605, a quality check is performed on the to-be-reviewed data.

It is to be noted that in this embodiment, the whole process from the automatic data cleaning, the data annotation stage, the selection of to-be-reviewed data to the final quality check is essentially a complete set of whole-process automatic quality check process of data annotation. Further, the whole process involves three quality checks: firstly, automatic data cleaning is essentially also a quality check means; then the automatic quality check is performed based on the annotation rule in the data annotation stage, which greatly improves the data quality; and finally, in the quality check stage, the quality check can be performed on the extracted to-be-reviewed data through a combination of manual quality check and automatic quality check. The quality of finally output data can be ensured through three stages of quality checks, and a whole-process automatic quality check manner is provided for acquiring high-quality data.

According to the technical solution of this embodiment of the present application, in the scenario where a quality check of annotated data is required, the operation of cleaning the set of to-be-annotated data is added so that dangerous (or low-quality) data can be warned in advance and supplementary collection can be performed, thus laying a foundation for ensuring the data quality and improving data delivery efficiency; moreover, the automatic quality check process is introduced in the annotation state, thus greatly improving the data quality; and then through the comprehensive analysis based on multi-dimensional data such as the data annotation information and the annotation person information, the quality check is performed on the to-be-reviewed data selected from the set of annotated data. Compared with the existing manner of a data quality check, the present application improves the efficiency of a data quality check, reduces the labor cost and provides a new idea for the data quality check while ensuring the data quality.

FIG. 7 is a structure diagram of a data processing apparatus according to an embodiment of the present application. This embodiment of the present application is suitable for the case of how to process data and especially suitable for the case of how to perform a quality check on annotated data in scenarios in which data annotation is required, such as obstacle recognition scenarios, target (such as a vehicle) tracking scenarios, human key point (such as face) recognition scenarios and named entity recognition scenarios such that the efficiency of the data quality check is improved while data quality is ensured. The apparatus can implement the data processing method of any embodiment of the present application. The apparatus can be integrated into an electronic device carrying data processing functions. A data processing apparatus 700 specifically includes a data selection module 701 and a quality check module 702.

The data selection module 701 is configured to select to-be-reviewed data from a set of annotated data according to at least one of data annotation information or annotation person information.

The quality check module 702 is configured to perform a quality check on the to-be-reviewed data.

According to the technical solution of this embodiment of the present application, through the comprehensive analysis based on the multi-dimensional data such as the data annotation information and the annotation person information, the quality check is performed on the to-be-reviewed data selected from the set of annotated data. Compared with the existing manner of a data quality check, the present application improves the efficiency of a data quality check, reduces the labor cost and provides a new idea for the data quality check while ensuring the data quality.

Exemplarily, the data selection module 701 includes a person selection unit and a first data selection unit.

The person selection unit is configured to select a to-be-reviewed person from candidate annotation persons according to at least one of time of engagement in annotation or a historical annotation accuracy rate in the annotation person information.

The first data selection unit is configured to select data annotated by the to-be-reviewed person from the set of annotated data as the to-be-reviewed data.

Exemplarily, the data selection module 701 further includes a second data selection unit.

The second data selection unit is configured to select the to-be-reviewed data from the set of annotated data according to at least one of a number of elements or a time period in the data annotation information.

Exemplarily, the data selection module 701 further includes a third data selection unit and a fourth data selection unit.

The third data selection unit is configured to select first to-be-reviewed data from the set of annotated data according to the at least one of the data annotation information or the annotation person information.

The fourth data selection unit is configured to select second to-be-reviewed data from the set of annotated data according to a data attention degree of a user, where the second to-be-reviewed data is different from the first to-be-reviewed data.

Exemplarily, the apparatus further includes a cleaning module and an annotation module.

The cleaning module is configured to perform cleaning processing on a set of to-be-annotated data.

The annotation module is configured to annotate the set of to-be-annotated data subjected to the cleaning processing to obtain the set of annotated data.

Exemplarily, the apparatus further includes an annotation rule determination module and the quality check module 702.

The annotation rule determination module is configured to determine an annotation rule of a set of to-be-annotated data according to an annotation material type and an annotation scenario.

The quality check module 702 is further configured to perform a quality check on annotated data according to the annotation rule in a process of annotating the set of to-be-annotated data.

Exemplarily, the quality check module 702 is configured to:
perform a quality check on annotated data of a current frame according to an object type in annotated data of a previous frame; and/or
perform a quality check on annotated data of a current frame according to a change of an object in the annotated data of the current frame in annotated data of historical frames.

According to an embodiment of the present application, the present application further provides an electronic device and a readable storage medium.

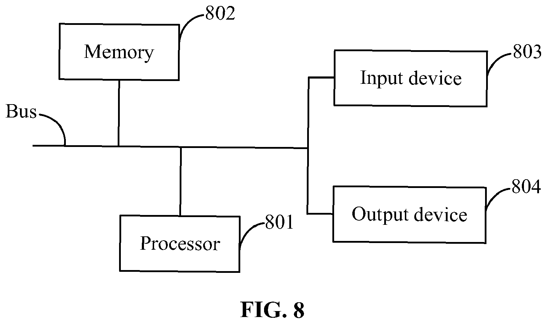

FIG. 8 is a block diagram of an electronic device for implementing a data processing method according to an embodiment of the present application. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present application as described and/or claimed herein.

As shown in FIG. 8, the electronic device includes one or more processors 801, a memory 802, and interfaces for connecting various components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a graphical user interface (GUI) displayed on an external input/output device (for example, a display device coupled to an interface). In other embodiments, if required, multiple processors and/or multiple buses may be used with multiple memories. Similarly, multiple electronic devices may be connected, each providing some necessary operations (for example, a server array, a set of blade servers or a multi-processor system). FIG. 8 shows one processor 801 by way of example.

The memory 802 is the non-transitory computer-readable storage medium provided in the present application. The memory stores instructions executable by at least one processor to cause the at least one processor to perform the data processing method provided in the present application. The non-transitory computer-readable storage medium of the present application stores computer instructions for causing a computer to perform the data processing method provided in the present application.

The memory 802 as a non-transitory computer-readable storage medium is configured to store non-transitory software programs, non-transitory computer-executable programs, and modules, for example, program instructions/modules (for example, the data selection module 701 and the quality check module 702 shown in FIG. 7) corresponding to the data processing method according to the embodiments of the present application. The processor 801 executes non-transitory software programs, instructions and modules stored in the memory 802 to execute the various function applications and data processing of a server, that is, implement the data processing method provided in the preceding method embodiments.

The memory 802 may include a program storage region and a data storage region. The program storage region may store an operating system and an application required by at least one function. The data storage region may store data created based on the use of the electronic device for performing the data processing method. Additionally, the memory 802 may include a high-speed random-access memory and a non-transient memory, for example, at least one disk memory, a flash memory or another non-transient solid-state memory. In some embodiments, the memory 802 optionally includes memories disposed remote from the processor 801, and these remote memories may be connected, through a network, to the electronic device for performing the data processing method. Examples of the preceding network include, but are not limited to, the Internet, an intranet, a local area network, a mobile communication network and a combination thereof.

The electronic device for performing the data processing method may further include an input device 803 and an output device 804. The processor 801, the memory 802, the input device 803 and the output device 804 may be connected by a bus or in other manners. FIG. 8 uses connection by a bus as an example.

The input device 803 can receive input number or character information and generate key signal input related to user settings and function control of the electronic device for performing the data processing method. The input device 503 may be, for example, a touchscreen, a keypad, a mouse, a trackpad, a touchpad, a pointing stick, one or more mouse buttons, a trackball or a joystick. The output device 804 may be, for example, a display device, an auxiliary lighting device (for example, a light-emitting diode (LED)) or a haptic feedback device (for example, a vibration motor). The display device may include, but is not limited to, a liquid-crystal display (LCD), a light-emitting diode (LED) display or a plasma display. In some embodiments, the display device may be a touchscreen.

The various embodiments of the systems and techniques described herein may be implemented in digital electronic circuitry, integrated circuitry, an application-specific integrated circuit (ASIC), computer hardware, firmware, software and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

These computing programs (also referred to as programs, software, software applications or codes) include machine instructions of a programmable processor. These computing programs may be implemented in a high-level procedural and/or object-oriented programming language and/or in an assembly/machine language. As used herein, the term "machine-readable medium" or "computer-readable medium" refers to any computer program product, device and/or apparatus (for example, a magnetic disk, an optical disk, a memory or a programmable logic device (PLD)) for providing machine instructions and/or data for a programmable processor, including a machine-readable medium for receiving machine instructions as machine-readable signals. The term "machine-readable signal" refers to any signal used in providing machine instructions and/or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), the Internet and a blockchain network.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS) service.

According to the technical solutions of the embodiments of the present application, through the comprehensive analysis based on the multi-dimensional data such as the data annotation information and the annotation person information, the quality check is performed on the to-be-reviewed data selected from the set of annotated data. Compared with the existing manner of a data quality check, the present application improves the efficiency of a data quality check, reduces the labor cost and provides a new idea for the data quality check while ensuring the data quality.

The present application can be applied to the field of artificial intelligence technologies which are the study of making computers simulate certain human thinking processes and intelligent behaviors (such as learning, reasoning, thinking and planning) both at the hardware and software levels. Artificial intelligence hardware technologies generally include technologies such as sensors, dedicated artificial intelligence chips, cloud computing, distributed storage and big data processing. Artificial intelligence software technologies mainly include several major technologies such as computer vision technologies, speech recognition technologies, natural language processing technologies, machine learning/deep learning, big data processing technologies and knowledge mapping technologies.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

The scope of the present application is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present application are within the scope of the present application.

## Claims

1. A data processing method, comprising:
selecting (S101) to-be-reviewed data from a set of annotated data according to at least one of data annotation information or annotation person information; and
performing (S102) a quality check on the to-be-reviewed data.

2. The data processing method of claim 1, wherein selecting the to-be-reviewed data from the set of annotated data according to the annotation person information comprises:
selecting (S201) a to-be-reviewed person from candidate annotation persons according to at least one of time of engagement in annotation or a historical annotation accuracy rate in the annotation person information; and
selecting (S202) data annotated by the to-be-reviewed person from the set of annotated data as the to-be-reviewed data.

3. The data processing method of claim 1, wherein selecting the to-be-reviewed data from the set of annotated data according to the data annotation information comprises:
selecting (S301) the to-be-reviewed data from the set of annotated data according to at least one of a number of elements or a time period in the data annotation information.

4. The data processing method of claim 1, wherein selecting the to-be-reviewed data from the set of annotated data according to the at least one of the data annotation information or the annotation person information comprises:
selecting (S401) first to-be-reviewed data from the set of annotated data according to the at least one of the data annotation information or the annotation person information; and
selecting (S402) second to-be-reviewed data from the set of annotated data according to a data attention degree of a user, wherein the second to-be-reviewed data is different from the first to-be-reviewed data.

5. The data processing method of claim 1, wherein before selecting to-be-reviewed data from the set of annotated data according to at least one of the data annotation information or the annotation person information, the data processing method further comprises:
performing cleaning processing on a set of to-be-annotated data; and
annotating the set of to-be-annotated data subjected to the cleaning processing to obtain the set of annotated data.

6. The data processing method of claim 1, further comprising:
determining (S602) an annotation rule of a set of to-be-annotated data according to an annotation material type and an annotation scenario; and
in a process of annotating the set of to-be-annotated data, performing (S603) a quality check on annotated data according to the annotation rule to obtain the set of annotated data.

7. The data processing method of claim 6, wherein performing the quality check on the annotated data according to the annotation rule comprises at least one of:
performing a quality check on annotated data of a current frame according to an object type in annotated data of a previous frame; or
performing a quality check on annotated data of a current frame according to a change of an object in the annotated data of the current frame in annotated data of historical frames.

8. A data processing apparatus, comprising:
a data selection module (701), which is configured to select to-be-reviewed data from a set of annotated data according to at least one of data annotation information or annotation person information; and
a quality check module (702), which is configured to perform a quality check on the to-be-reviewed data.

9. The data processing apparatus of claim 8, wherein the data selection module (701) comprises:
a person selection unit, which is configured to select a to-be-reviewed person from candidate annotation persons according to at least one of time of engagement in annotation or a historical annotation accuracy rate in the annotation person information; and
a first data selection unit, which is configured to select data annotated by the to-be-reviewed person from the set of annotated data as the to-be-reviewed data.

10. The data processing apparatus of claim 8, wherein the data selection module (701) comprises:
a second data selection unit, which is configured to select the to-be-reviewed data from the set of annotated data according to at least one of a number of elements or a time period in the data annotation information.

11. The data processing apparatus of claim 8, wherein the data selection module (701) comprises:
a third data selection unit, which is configured to select first to-be-reviewed data from the set of annotated data according to the at least one of the data annotation information or the annotation person information; and
a fourth data selection unit, which is configured to select second to-be-reviewed data from the set of annotated data according to a data attention degree of a user, wherein the second to-be-reviewed data is different from the first to-be-reviewed data.

12. The data processing apparatus of claim 8, further comprising:
a cleaning module, which is configured to perform cleaning processing on a set of to-be-annotated data; and
an annotation module, which is configured to annotate the set of to-be-annotated data subjected to the cleaning processing to obtain the set of annotated data.

13. The data processing apparatus of claim 8, further comprising:
an annotation rule determination module, which is configured to determine an annotation rule of a set of to-be-annotated data according to an annotation material type and an annotation scenario;
and
a quality check module, which is configured to perform a quality check on annotated data according to the annotation rule in a process of annotating the set of to-be-annotated data.

14. An electronic device, comprising:
at least one processor (801); and
a memory (802) communicatively connected to the at least one processor (801),
wherein the memory (802) stores an instruction executable by the at least one processor (801), and the instruction is executed by the at least one processor (801) to cause the at least one processor (801) to perform the data processing method of any one of claims 1 to 7.

15. A non-transitory computer-readable storage medium storing a computer instruction for causing a computer to perform the data processing method of any one of claims 1 to 7.
